# EUROPÄISCHE PATENTSCHRIFT

(11) **EP 0 593 925 B1**
(45) Veröffentlichungstag und Bekanntmachung des Hinweises auf die Patenterteilung: **29.12.1997**
(21) Anmeldenummer: 93115328.2
(22) Anmeldetag: 23.09.1993
(51) Int. Cl.: G01P 13/02, G01D 5/14

(54) **Vorrichtung zum Erfassen der Bewegung eines bewegbaren Teils**
Device for detecting the movement of a movable part
Dispositif de détection de mouvement d'une pièce mobile

(30) Priorität: 13.03.1993 DE 4308030; 21.10.1992 DE 4235471
(43) Veröffentlichungstag der Anmeldung: 27.04.1994
(73) Patentinhaber: ROBERT BOSCH GMBH, 70442 Stuttgart (DE)
(72) Erfinder: Peter, Cornelius, Dipl.-Ing., D-77815 Buehl-Neusatz (DE); Seiler, Hartmut, Dipl.-Phys., D-76532 Baden-Baden (DE); Aab, Volker, D-77880 Sasbach (DE); Haderer, Guenter, Dipl.-Ing. (FH), D-77815 Buehl (DE)

(56) Entgegenhaltungen:
- EP-A- 0 473 068
- DE-B- 2 824 697
- US-A- 4 785 242
- U.TIETZE, CH.SCHENK 'HALBLEITER-SCHALTUNGSTECHNIK' 1980 , SPRINGER-VERLAG , BERLIN HEIDELBERG NEW YORK SEITEN 54 UND 112.

## Beschreibung

Die Erfindung geht aus von einer Vorrichtung zum Erfassen der Bewegung eines bewegbaren Teils nach der Gattung des Hauptanspruchs. Aus Firmenunterlagen von PHILIPS, Philips Semiconductors, KMI 10/1-Integrated Rotational Speed Sensor, SC 17, Sept. 1992, ist ein Sensor bekannt, der die Drehzahl eines rotierenden Teils erfaßt. Als Sensorelement wird ein Hall-Sensor eingesetzt, dessen Ausgangssignal einer signalverarbeitenden Anordnung zugeleitet wird. Die signalverarbeitende Anordnung enthält ein Filter zum Unterdrücken von elektromagnetischen Störsignalen, einen Verstärker sowie ein Schmitt-Trigger. Das Ausgangssignal des Schmitt-Triggers schaltet eine Stromquelle, die einen definierten Strom zwischen zwei Stromversorgungsanschlüssen zuläßt. Eine weitere Stromquelle ist in der Energieversorgungsschaltung des Sensors enthalten. Die weitere Stromquelle hält den für die Energieversorgung des Sensors benötigten Strom auf einem konstanten Wert. Eine nicht näher beschriebene Auswerteanordnung wertet den auf einer der beiden Stromversorgungsleitungen fließenden Strom aus. Die von der geschalteten Stromquelle, die vom Schmitt-Trigger angesteuert ist, eingeprägte Stromänderung auf einer der Stromversorgungsleitungen wird in der Auswerteanordnung in ein Drehzahlsignal umgesetzt.

Aus der DE-U 90 12 217.8 ist eine Anordnung bekannt, die einen elektromotorischen Antrieb zum Öffnen und Schließen von Fenstern eines Kraftfahrzeugs enthält. Ein zentrales Gerät, das Steuer- und Auswerteanordnungen aufweist, ist mit mehreren Antriebseinheiten verbunden, die in den Türen des Kraftfahrzeugs angeordnet sind. Die Antriebseinheiten enthalten einen Elektromotor sowie eine Sensoranordnung. Die Sensoranordnung erfaßt eine Drehzahl des Antriebs. Zwischen dem zentralen Gerät und jeder Antriebseinheit sind fünf Verbindungsleitungen zur Signalübertragung und Energieübertragung vorgesehen.

Der Erfindung liegt die Aufgabe zugrunde, den Verkabelungsaufwand einer Vorrichtung zum Erfassen der Bewegung eines bewegbaren Teils mit einem ersten Teil, das eine Sensoranordnung enthält, und mit einem vom ersten Teil abgesetzten zweiten Teil, das eine Auswerteanordnung enthält, zu vereinfachen.

Die Aufgabe wird durch die im unabhängigen Patentanspruch angegebenen Merkmale gelöst.

### Vorteile der Erfindung

Die erfindungsgemäße Vorrichtung weist den Vorteil auf, daß zur Signalübertragung zwischen der Sensoranordnung, die wenigstens zwei Lagesensoren enthält, und der Auswerteanordnung, die aus den von den Lagesensoren abgegebenen Signalen beispielsweise eine Geschwindigkeit und eine Bewegungsrichtung ermittelt, lediglich eine Verbindungsleitung erforderlich ist. Die Zuweisung von diskreten unterschiedlichen Werten zu den von den beiden Sensoren abgegebenen Signalen ermöglicht eine einfache Signalaufbereitung in der Sensoranordnung mittels geschalteter Strom- oder geschalteter Spannungsquellen. Die Signalübertragung von der Sensoranordnung zur Auswerteanordnung ist auf wenige unterschiedliche diskrete Signalpegel festgelegt. Mit dieser Maßnahme ist eine hohe Festigkeit gegenüber Störsignalen erreichbar. Diese Signalübertragung ist insbesondere für eine digitale Weiterverarbeitung des Signals vorteilhaft.

Vorteilhafte Weiterbildungen und Ausgestaltungen der erfindungsgemäßen Vorrichtung ergeben sich aus abhängigen Patentansprüchen.

In einer vorteilhaften Ausgestaltung sind die Sensoren als magnetfeldempfindliche Sensoren ausgebildet. Besonders geeignet sind Halleffekt-Sensoren, die preisgünstig erhältlich sind und die eine große Betriebssicherheit aufweisen.

Eine andere vorteilhafte Ausgestaltung sieht vor, daß ein diskreter wert, der dem einen Sensorsignal zugeordnet ist, gegenüber dem anderen diskreten Wert, der dem anderen Sensorsignal zugeordnet ist, den doppelten Pegel aufweist. Mit dieser Maßnahme wird eine höchstmögliche Detektionssicherheit der unterschiedlichen Signalpegel erzielt.

Die Signalübertragung zwischen der Sensoranordnung und der Auswerteanordnung ist mit einem eingeprägten Spannungs- oder einem eingeprägten Stromsignal durchführbar. Die Einprägung des Stromsignals, vorzugsweise mittels zweier geschalteter Stromquellen, weist den Vorteil auf, daß eingekoppelte Störspannungen oder beispielsweise unterschiedliche Bezugspotentiale zwischen Auswerte- und Sensoranordnung auf die Übertragung keinen Einfluß haben.

Eine Weiterbildung der Signalübertragung mit eingeprägtem Strom sieht den Einsatz einer Stromspiegelschaltung in der Auswerteanordnung vor. Die Stromspiegelschaltung ermöglicht ein präzises Umsetzen des Stromsignals in ein Spannungssignal, das für die weitere Auswertung einfacher handhabbar ist als ein Stromsignal.

Eine andere Weiterbildung betrifft die Energieversorgung der Sensoranordnung und, sofern erforderlich, die der Sensorelemente. Die Weiterbildung sieht eine Einbeziehung der Verkabelung eines Elektromotors vor, der das bewegbare Teil antreibt.

Gemäß einer ersten Ausführung der Weiterbildung ist die Energieversorgung der Sensoranordnung über die Signalleitung sowie über wenigstens eine der zum Elektromotor führenden Leitungen vorgesehen. Der auf der Signalleitung fließende Strom setzt sich in dieser Ausführung zusammen aus dem Strom für die Energieversorgung der Sensoranordnung und aus dem für die Signalübertragung vorgegebenen Strom. Der Vorteil dieser ersten Ausführung liegt darin, daß bei einem vorgegebenen Kurzschluß des Elektromotors, den eine für die Steuerung des Motors vorgesehene Steueranordnung zum raschen Abbremsen des Elektromotors auslösen kann, die Energieversorgung der Sensoranordnung über die zum Motor führenden Leitungen ohne weitere Maßnahmen sichergestellt ist. Ein gegebenenfalls vorgesehener Energiespeicher, welcher der Sensoranordnung zugeordnet ist, kann deshalb gering bemessen sein, oder vollständig entfallen.

Eine alternative Ausführung sieht die Energieversorgung der Sensoranordnung über die beiden zum Elektromotor führenden Leitungen vor. Diese Ausführung ist insbesondere geeignet für eine Vorgabe einer eingeprägten Spannung auf der Signalleitung zur Signalübertragung, wobei die Spannung unabhängig von einer ansonsten erforderlichen Versorgungsspannung festlegbar ist.

Die erfindungsgemäße Vorrichtung zum Erfassen der Bewegung eines bewegbaren Teils ist insbesondere geeignet zur Verwendung in einem Verstellantrieb, der vorzugsweise in Kraftfahrzeugen angeordnet ist. Die geringe Anzahl von Verbindungsleitungen zwischen dem ersten Teil und wenigstens einem zweiten Teil bringt Kosteneinsparungen in der Serienproduktion und erhöht die Übersichtlichkeit.

Weitere vorteilhafte Weiterbildungen und Verbesserungen der erfindungsgemäßen Vorrichtung ergeben sich aus weiteren abhängigen Patentansprüchen.

Die erfindungsgemäße Vorrichtung zum Erfassen der Bewegung eines bewegbaren Teils wird anhand der Zeichnung in der folgenden Beschreibung näher erläutert.

### Zeichnung

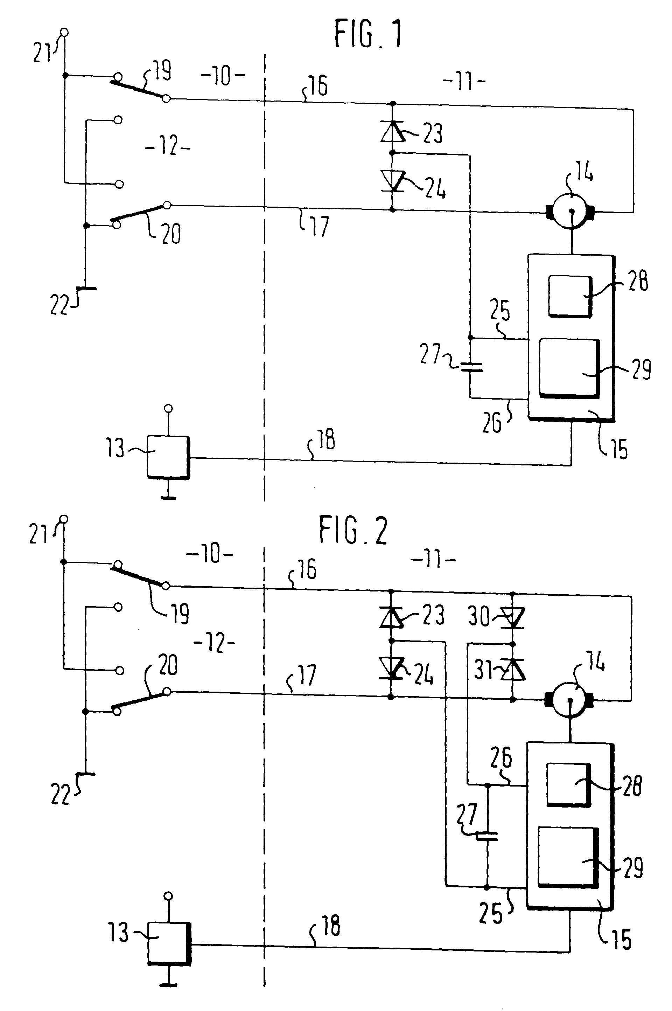

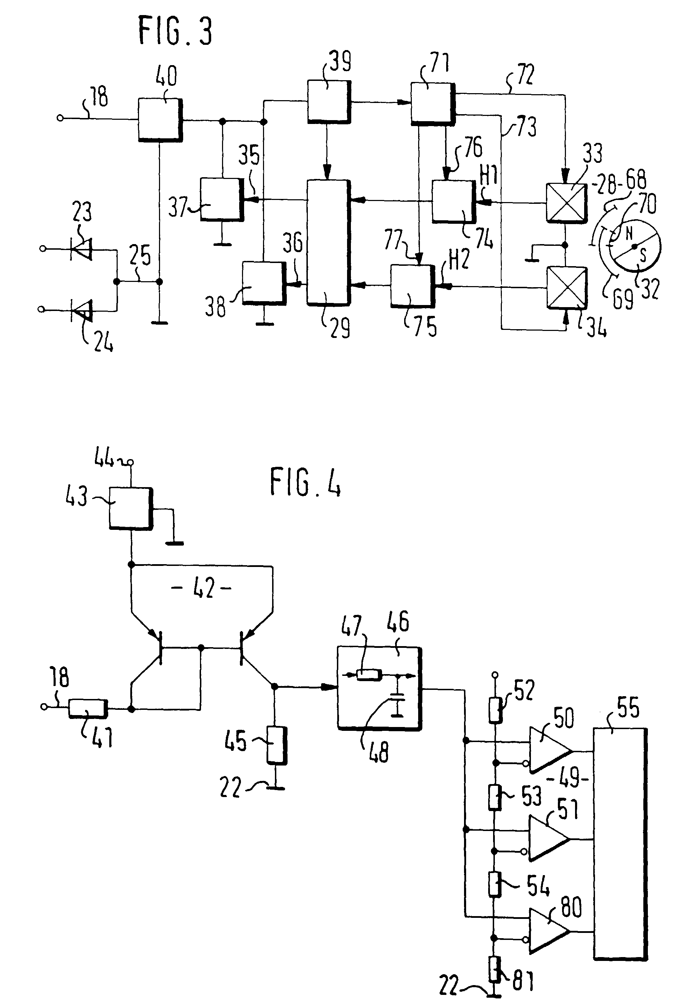

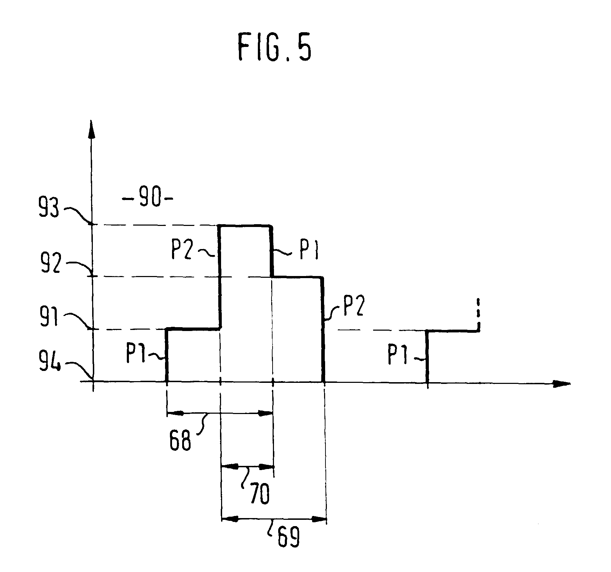

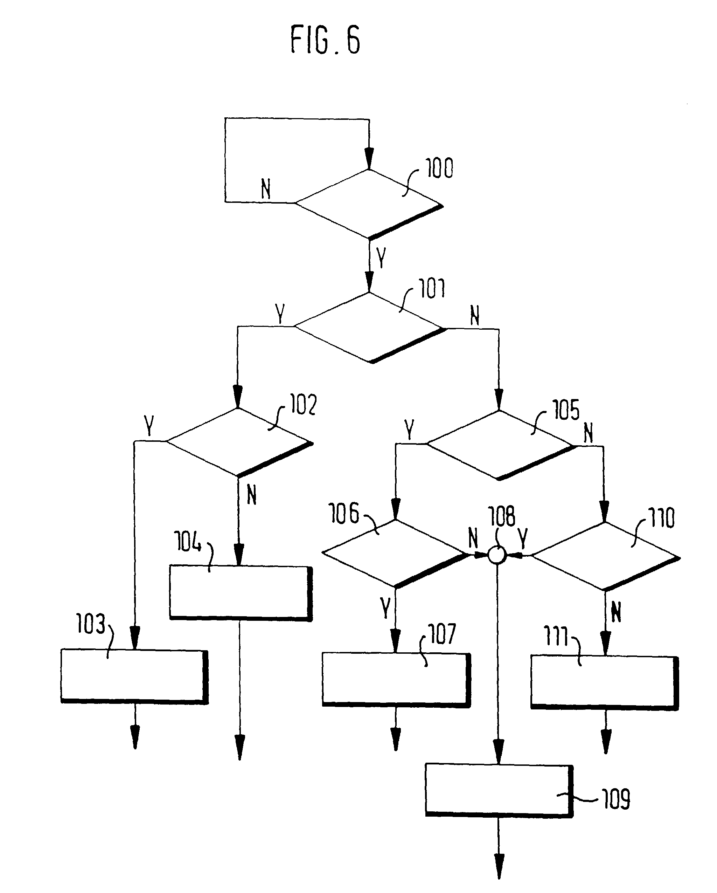

Figuren 1 und 2 zeigen Ausführungsbeispiele einer erfindungsgemäßen Vorrichtung zum Erfassen der Bewegung eines bewegbaren Teils, Figur 3 zeigt ein Ausführungsbeispiel einer Sensoranordnung, Figur 4 zeigt ein Ausführungsbeispiel einer Auswerteanordnung, Figur 5 zeigt ein Lagesignal in Abhängigkeit von einem Ort und Figur 6 zeigt ein Flußdiagramm eines in der Auswerteanordnung ablaufenden Verfahrens.

Figur 1 zeigt ein erstes Teil 10 und ein vom ersten Teil 10 abgesetztes zweites Teil 11 eines elektromotorischen Antriebs. Die beiden Teile 10, 11 sind strichliniert voneinander getrennt dargestellt. Das erste Teil 10 enthält eine Steueranordnung 12 und eine Auswerteanordnung 13.

Das zweite Teil enthält einen Elektromotor 14 und eine Sensoranordnung 15.

Die Steueranordnung 12 ist mittels zweier Verbindungsleitungen 16, 17 mit dem im zweiten Teil 11 angeordneten Elektromotor 14 verbunden. Eine dritte Leitung 18 verbindet die Auswerteanordnung 13 mit der im zweiten Teil 11 enthaltenen Sensoranordnung 15.

Die Steueranordnung 12 enthält erste und zweite Schaltmittel 19, 20, welche die Verbindungsleitungen 16, 17 jeweils entweder mit einem Betriebsspannungsanschluß 21 oder mit Masse 22 verbinden. Die Verbindungsleitungen 16, 17 sind jeweils mit Gleichrichterdioden 23, 24 verbunden, deren Anoden jeweils an einem ersten Stromversorgungsanschluß 25 der Sensoranordnung 15 liegen. Zwischen dem ersten Stromversorgungsanschluß 25 und einem zweiten Stromversorgungsanschluß 26 der Sensoranordnung 15 ist ein Kondensator 27 geschaltet. Die Sensoranordnung 15 enthält einen Sensor 28, der in Wirkverbindung mit dem Elektromotor 14 steht. Weiterhin ist in der Sensoranordnung 15 eine signalverarbeitende Anordnung 29 vorgesehen.

Bei dem in Figur 2 gezeigten Blockschaltbild des die beiden Teile 10, 11 enthaltenden elektromotorischen Antriebs sind diejenigen Teile, die mit den in Figur 1 gezeigten Teilen übereinstimmen, jeweils mit denselben Bezugszeichen versehen. Der zweite Stromversorgungsanschluß 26 der Sensoranordnung 15 ist über weitere Gleichrichterdioden 30, 31 mit den Verbindungsleitungen 16, 17 verbunden. Der zweite Stromversorgungsanschluß 26 ist jeweils an die Kathodenanschlüsse der Dioden 30, 31 geschaltet.

Figur 3 zeigt ein Ausführungsbeispiel der in den Figuren 1 und 2 gezeigten Sensoranordnung 15. Der Sensor 28 enthält wenigstens einen vom Elektromotor 14 angetriebenen Permanentmagneten 32, der mit einem ersten und zweiten magnetfeldempfindlichen Element 33, 34 zusammenwirkt. Das erste Element 33 gibt ein erstes Lagesignal H1 an einen ersten Signalspeicher 74 ab. Das erste Lagesignal H1 ist einem ersten Lagebereich 68 zugeordnet. Das zweite Element 34 gibt ein zweites Lagesignal H2 an einen zweiten Signalspeicher 75 ab. Das zweite Lagesignal H2 ist einem zweiten Lagebereich 69 zugeordnet. Die Lagebereiche 68, 69 überlappen sich in einem Gebiet 70. Ausgangssignale der beiden Signalspeicher 74, 75 werden der signalverarbeitenden Anordnung 29 zugeführt, die Steuersignale 35, 36 für gesteuerte Stromquellen 37, 38 bereitstellt. Zur Energieversorgung der magnetfeldempfindlichen Elemente 33, 34 und der signalverarbeitenden Anordnung 29 ist eine weitere Stromquelle 39 vorgesehen. Die weitere Stromquelle 39 gibt die Energie an einen Umschalter 71 ab, der die Energie über die Leitungen 72, 73 jeweils den magnetfeldempfindlichen Elementen 33, 34 weiterleitet. Der Umschalter 71 gibt weiterhin Speichersignale 76, 77 an die Signalspeicher 74, 75 ab. Die dritte Leitung 18 führt zu einem Spannungsregler 40, dessen Ausgang mit den Stromquellen 37, 38 sowie mit der weiteren Stromquelle 39 verbunden ist. Der Spannungsregler 40 ist weiterhin mit dem ersten Stromversorgungsanschluß 25 verbunden, der zu den Anoden-Anschlüssen der Gleichrichterdioden 23, 24 führt. Die Dioden 23, 24 sind in Figur 3 nochmals eingetragen, um zu verdeutlichen, daß die in Figur 3 gezeigten magnetfeldempfindlichen Elemente 33, 34 einschließlich der Dioden 23, 24; 30, 31 sowie die weiteren in Figur 3 gezeigten Funktionsblöcke bis auf den Permanentmagneten 32 innerhalb einer integrierten Schaltung untergebracht sein können.

Figur 4 zeigt ein Ausführungsbeispiel der Auswerteanordnung 13. Die dritte Leitung 18 führt über einen Widerstand 41 zu einer Stromspiegelschaltung 42. Als Energiequelle ist eine Spannungswandlerschaltung 43 vorgesehen, welche die an einem Stromversorgungsanschluß 44 liegende Spannung auf ein höheres Potential hochtransformiert. An einem ausgangsseitigen Arbeitswiderstand 45 tritt eine Spannung auf, die dem über die dritte Leitung 18 fließenden Strom entspricht. Das am Arbeitswiderstand 45 auftretende Spannungssignal wird über eine Tiefpaßanordnung 46, die eine Widerstands-Kondensator-Kombination 47, 48 enthält, auf eine Komparatoranordnung 49 gegeben. Die Komparatoranordnung 49 enthält drei Differenzverstärker 50, 51, 80, deren invertierender Eingang jeweils an einer vier Widerstände 52, 53, 54, 81 enthaltenden Widerstandsteilerkette angeschlossen sind. Die nicht invertierenden Eingänge der Differenzverstärker 50, 51, 80 sind mit dem Tiefpaß 46 verbunden. Die Differenzverstärker 50, 51, 80 geben Ausgangssignale an einen Mikroprozessor 55 ab.

Figur 5 zeigt ein über die dritte Leitung 18 übertragenes Lagesignal 90. Das Lagesignal 90 kann einen ersten Signalpegel 91, einen zweiten Signalpegel 92, einen dritten Signalpegel 93 sowie einen vierten Signalpegel 94 annehmen. In Figur 5 sind weiterhin die den unterschiedlichen Pegeln 91, 92, 93, 94 zugeordneten Lagebereiche 68, 69 sowie das Überlappungsgebiet 70 eingetragen. Bei einem ersten Pegelwechsel P1 des ersten Lagesignals H1 ändert sich der Pegel 94 auf den ersten Pegel 91. Beim nächsten Pegelwechsel P2 ändert sich der Pegel vom ersten Pegel 91 auf den dritten Pegel 93. Beim nächsten Pegelwechsel ändert sich der Pegel wieder vom dritten Pegel 93 auf nunmehr den zweiten Pegel 92. Da dieser Wechsel betragsmäßig mit dem ersten Pegel P1 übereinstimmt, wird dieser Wechsel ebenfalls mit P1 bezeichnet. Danach ändert sich der Pegel vom zweiten Pegel 92 wieder auf den vierten Pegel 94. Da dieser Pegelwechsel mit dem Pegelwechsel P2 betragsmäßig übereinstimmt, wird der letzte Pegelwechsel ebenfalls mit P2 bezeichnet.

Das in Figur 6 gezeigte Flußdiagramm liegt einem in der Auswerteanordnung 13 realisierten Verfahren zugrunde. Mit dem Verfahren ist die Bewegungsrichtung eines bewegbaren Teils über die Bewegung des Permanentmagneten 32 ermittelbar. Das Flußdiagramm wird weiter unten bei der Beschreibung des Verfahrens näher erläutert.

Zunächst wird die Funktion des in den Figuren 1 und 2 gezeigten Vorrichtung zum Erfassen der Bewegung eines bewegbaren Teils erläutert:

Die im ersten Teil 10 enthaltene Steueranordnung 12 sowie die Auswerteanordnung 13 sind beispielsweise in einem zentralen Gerät untergebracht, an das wenigstens ein zweites Teil 11 angeschlossen ist. Der zweite Teil 11 ist vorzugsweise in einem Gehäuse enthalten, das den Elektromotor 14 und die in unmittelbarer Motornähe 10 installierte Sensoranordnung 15 aufnimmt. Zu jedem angeschlossenen zweiten Teil 11 führen die Verbindungsleitungen 16, 17 sowie die dritte Leitung 18.

Die Steueranordnung 12 hat die Aufgabe, die Betriebsspannung an den Verbindungsleitungen 16, 17 für den Elektromotor 14 derart vorzugeben, daß der Elektromotor 14 in der einen oder in der anderen Drehrichtung betreibbar ist. Die Steueranordnung 12 enthält die beiden Schaltmittel 19, 20, die die Verbindungsleitungen 16, 17 entweder mit dem Betriebsspannungsanschluß 21 oder mit Masse 22 verbinden. Die Schaltmittel 19, 20 können auch derart betätigt werden, daß beide Verbindungsleitungen 16, 17 über die Schaltmittel 19, 20 entweder gleichzeitig an Masse 22 oder gleichzeitig an den Betriebsspannungsanschluß 21 geschaltet werden können. Der Elektromotor 14 ist somit kurzschließbar. Mit dieser Maßnahme ist ein rasches Abbremsen des Elektromotors 14 möglich.

Der Elektromotor 14 im zweiten Teil 11 ist zum Antreiben eines nicht näher gezeigten bewegbaren Teils vorgesehen. Ein solches bewegbares Teil ist beispielsweise Bestandteil eines Verstellantriebs, der vorzugsweise in einem Kraftfahrzeug vorgesehen ist. Das bewegbare Teil ist beispielsweise eine Antenne, ein Faltverdeck, ein Fenster, ein Rückspiegel, ein Teil eines Sitzes und/oder ein Schiebedach.

Über die dritte Leitung 18 ist eine Signalübertragung vom zweiten Teil 11 zum ersten Teil 10 vorgesehen. Übertragen wird ein Signal, aus dem die Auswerteanordnung 13 die Bewegung des bewegbaren Teils ermitteln kann. Die Auswerteanordnung ermittelt beispielsweise die Lage und die Geschwindigkeit oder beispielsweise die Drehzahl und die Drehrichtung eines rotierenden Teils. In Abhängigkeit vom ermittelten Signal erfolgt beispielsweise die Ansteuerung des Elektromotors 14 in der einen oder in der anderen Richtung. Beispielsweise kann mit einem Drehzahl- und Drehrichtungssignal auch ein Einklemmschutz realisiert werden, der das Einklemmen von Gegenständen oder von Körperteilen zwischen dem bewegbaren Teil und einem anderen, ebenfalls nicht gezeigten festen Teil verhindert.

Die in der Sensoranordnung 15 enthaltene signalverarbeitende Anordnung 29 benötigt im allgemeinen eine Energieversorgung. Auch der Sensor 28 benötigt häufig bereits selbst eine Energieversorgung. Die magnetfeldempfindlichen Elemente 33, 34 können ebenfalls einen Energiebedarf aufweisen. Bei einem auf dem Hall-Effekt basierenden magnetfeldempfindlichen Element muß ein Strom bereitgestellt werden. Magnetoresistive Elemente müssen ebenfalls von einem Strom durchflossen werden, damit ein Sensorsignal erhalten werden kann.

Bei dem in Figur 1 gezeigten Ausführungsbeispiel ist eine Energieversorgung der Sensoranordnung 15 über die dritte Leitung sowie über wenigstens eine der beiden Verbindungsleitungen 16, 17 vorgesehen. Der erste Stromversorgungsanschluß 25 der Sensoranordnung 15 ist über die als Gleichrichter wirkenden Dioden 23, 24 mit den zu dem Elektromotor 14 führenden Verbindungsleitungen 16, 17 verbunden. Zunächst ist während des Betriebs des Elektromotors 17 sichergestellt, daß auf einer der beiden Verbindungsleitungen 16, 17 das benötigte Potential auftritt. Im gezeigten Ausführungsbeispiel ist dies das negative Potential. Aber auch in Stillstandszeiten des Elektromotors 14 ist die Energieversorgung sichergestellt, weil die Schaltmittel 19, 20 zumindest eine der beiden Leitungen 16, 17 mit Masse 22 verbinden, wobei die Masse 22 dem negativen Potential entspricht. Im Falle eines Kurzschließens des Elektromotors 14 gegen Masse 22 führen beide Leitungen 16, 17 negatives Potential. Das positive Potential wird der Sensoranordnung 15 über die dritte Leitung 18 zugeleitet. Die Auswerteanordnung 13 verbindet die dritte Leitung 18 über eine Schaltung, die anhand der Beschreibung von Figur 4 näher erläutert wird, mit einem Stromversorgungsanschluß, der das passende positive Potential aufweist. Gegebenenfalls ist der Kondensator 27 vorgesehen, der eine Energiespeicherung vornehmen kann. Der Kondensator 27 ist zwischen dem ersten Stromversorgungsanschluß 25 und dem zweiten Stromversorgungsanschluß 26 der Sensoranordnung 15 geschaltet. Der zweite Stromversorgungsanschluß 26 kann beispielsweise intern unmittelbar mit der dritten Leitung 18 verbunden sein. Die Energiespeicherung im Kondensator 27 für eine kurze Zeit kann in dem Betriebszustand erforderlich sein, der dann gegeben ist, wenn die beiden Schaltmittel 19, 20 zum Abbremsen des Elektromotors 14 die beiden Verbindungsleitungen 16, 17 gleichzeitig mit dem Betriebsspannungsanschluß 21 verbinden, der positives Potential führt. Der Kondensator 27 muß in diesem Fall für die Sensoranordnung 15 noch so lange Energie bereitstellen, bis der Elektromotor 15 abgebremst ist. Mit anderen Maßnahmen, die anhand des in Figur 4 gezeigten Schaltbildes näher erläutert sind, kann der Kondensator 27 auch in diesem Betriebsfall vollständig entfallen.

Der Unterschied zwischen den in Figur 1 und Figur 2 gezeigten Ausführungsformen des elektromotorischen Antriebs liegt im wesentlichen darin, daß bei der in Figur 2 gezeigten Ausführung die Energieversorgung für die Sensoranordnung vollständig über die beiden zum Elektromotor 14 führenden Verbindungsleitungen 16, 17 erfolgt. Die Gleichrichterdioden 23, 24 stellen am ersten Stromversorgungsanschluß 25 negatives und die Gleichrichterdioden 30, 31 am zweiten Stromversorgungsanschluß positives Potential zur Verfügung. Die Energieversorgung ist stets während des Betriebs des Elektromotors 14 sichergestellt. Um auch bei einem gegebenenfalls vorgesehenen Kurzschließen des Elektromotors 14 eine genügende Energiereserve bereithalten zu können, ist der Kondensator 27 zur Energiespeicherung stets dann erforderlich, wenn auch während des Abbremsvorgangs des Elektromotors 14 die Sensoranordnung 15 Signale an die Auswerteanordnung 13 übertragen soll. In einer Ausgestaltung der in Figur 2 gezeigten Ausführung des elektromotorischen Antriebs ist vorgesehen, daß die Sensoranordnung 15 die Spannung an der dritten Leitung 18 einprägt. Diese Ausgestaltung ist dadurch möglich, daß auf der dritten Leitung 18 nur noch die Signalübertragung vom zweiten Teil 11 zum ersten Teil 10 stattfindet. Ein weiterer Vorteil der Ausführung ergibt sich durch die wahlfreie Festlegung der auf der dritten Leitung 18 übertragenen Signalpegel, gleichgültig ob Strom oder Spannung, die eine einfache und sichere Auswertung ermöglicht.

Bei der in Figur 3 gezeigten Sensoranordnung 15 ist als Sensor 28 beispielhaft ein Magnetfeldsensor zugrundegelegt. Der Sensor 28 mit den beiden magnetfeldempfindlichen Elementen 33, 34, vorzugsweise Hall-Elemente, geben die Lagesignale H1, H2 an die Signalspeicher 74, 75 in Abhängigkeit von der Stellung des Permanentmagneten 32 ab. Der Sensor 28 ermöglicht die Bereitstellung eines Drehzahlsignals, eines Lagesignals und eines Drehrichtungssignals. Die Lagesignale H1, H2 werden an die Signalspeicher 74, 75 abgegeben, die in Abhängigkeit vom Speichersignal 76, 77 die Lagesignale H1, H2 für eine vorgegebene Zeit speichern. Die Speichersignale 76, 77 stellt der Umschalter 71 bereit, der auch die Energieversorgung der magnetfeldempfindlichen Elemente 33, 34 über die Leitungen 72, 73 steuert. Die Stromaufnahme der als Hall-Sensoren realisierten magnetfeldempfindlichen Elemente 33, 34 wird im wesentlichen durch den Querstrom in den Elementen 33, 34 festgelegt. Der Umschalter 71 schaltet die Versorgungsspannung zwischen den beiden Elementen 33, 34 in periodischen Zeitabständen um. Die Signalauswertung erfolgt nur bei dem gerade mit Energie versorgten Element 33, 34. Während das jeweils andere Element 33, 34 mit Energie versorgt ist, wird das Lagesignal H1, H2 im Signalspeicher 74, 75 zwischengespeichert. Die zeitgleiche Steuerung der Signalspeicher 74, 75 mit der Umschaltung der Energieversorgung erfolgt im Umschalter 71. Die Frequenz für die Umschaltung der Energieversorgung zwischen den magnetfeldempfindlichen Elementen 33, 34 sollte wenigstens doppelt so hoch gewählt werden als die Frequenz der zu erwartenden Zustandsänderungen des Sensors 28. Der wesentliche Vorteil dieser Maßnahme ist die Reduzierung der Gesamtenergieaufnahme, die sich besonders vorteilhaft durch die damit verbundene Reduzierung des über die dritte Leitung 18 zu transportierenden Stroms bemerkbar macht.

Die signalverarbeitende Anordnung 29 gibt mit Steuersignalen 35, 36 entweder die an der dritten Leitung 18 liegende Spannung oder den über die dritte Leitung 18 fließenden Strom vor. Im gezeigten Ausführungsbeispiel steuert die signalverarbeitende Anordnung 29 zwei Stromquellen 37, 38 an, die auf unterschiedliche diskrete Stromwerte fest eingestellt sind. Die signalverarbeitende Anordnung 29 enthält beispielsweise Verstärkerschaltungen, Komparatoren, Filterschaltungen zum Unterdrücken von Störungen oder Treiberschaltungen. Sofern die von den Sensorelementen 33, 34 abgegebenen und gegebenenfalls zwischengespeicherten Lagesignale H1, H2 unmittelbar geeignet sind, die Quellen 37, 38 anzusteuern, kann die signalverarbeitende Anordnung 29 auch vollständig entfallen. Die von den Quellen 37, 38 vorgegebenen Ströme addieren sich auf der dritten Leitung 18.

Mit der gezeigten Anordnung sind demnach die in Figur 5 gezeigten vier unterschiedlichen Pegel 91, 92, 93, 94 vorgebbar. Bei der Vorgabe des über die dritte Leitung 18 fließenden Stroms ist es erforderlich, daß der zur Energieversorgung der signalverarbeitenden Anordnung 29 und der magnetfeldempfindlichen Elemente 33, 34 erforderliche Strom einen bekannten Wert aufweist, der in der Auswerteanordnung 13 berücksichtigt werden kann. Vorteilhafterweise ist deshalb in der Sensoranordnung 15 die weitere Stromquelle 39 angeordnet, die den Versorgungsstrom unabhängig von der Spannung festhält.

Eine vorteilhafte Ausgestaltung sieht den Einsatz des Spannungsreglers 40 vor. Der Spannungsregler 40 gibt einerseits eine feste Betriebsspannung für die Sensoranordnung 15 und die magnetfeldempfindlichen Elemente 33, 34 vor. Andererseits reduziert er Störspannungseinflüsse. Solche Störungen sind beispielsweise negative Impulse, die beim Abschalten des Elektromotors 14 über die Dioden 23, 24 in die Sensoranordnung 15 eingekoppelt werden.

Das in Figur 4 gezeigte Ausführungsbeispiel der Auswerteanordnung 13 enthält eingangsseitig die Stromspiegelschaltung 42, die den über die dritte Leitung 18 fließenden Strom in eine entsprechende Ausgangsspannung am Arbeitswiderstand 45 umsetzt. Der eingangsseitig vorgesehene Widerstand 41 begrenzt den über die dritte Leitung 18 fließenden Strom auf einen von der Betriebsspannung abhängigen Maximalwert und erfüllt somit eine Schutzfunktion. Die Stromspiegelschaltung 42 ist beispielsweise in dem Fachbuch von U. TIETZE und CH. SCHENK, "Halbleiterschaltungstechnik", 5. Auflage, Springer-Verlag, 1980, Seiten 54 und 112 näher erläutert, so daß eine detaillierte Schaltungsbeschreibung hier nicht erforderlich ist. Das am Arbeitswiderstand 45 auftretende Signal gelangt über die Tiefpaßanordnung 46 an die Komparatoranordnung 49. Die Tiefpaßanordnung 46, die im einfachsten Fall als Widerstands-Kondensator-Kombination 47, 48 als Tiefpaß erster Ordnung realisiert ist, reduziert gegebenenfalls eingekoppelte hochfrequente Störungen auf ein unschädliches Maß. Anstelle eines Tiefpasses erster Ordnung ist es auch möglich, einen Tiefpaß höherer Ordnung oder eine Bandfilterschaltung vorzusehen. Die Komparatoranordnung 49 ermöglicht die Detektion der vier unterschiedlichen Signalpegel 91, 92, 93, 94. Die einzelnen Pegel sind durch die als Spannungsteiler geschalteten Widerstände 52, 53, 54, 81 festgelegt. Anzapfungen des Spannungsteilers sind mit den invertierenden Eingängen der drei Differenzverstärker 50, 51, 80 verbunden. Die Ausgangssignale der drei Differenzverstärker 50, 51, 80 sind Eingangsports des Mikroprozessors 55 zugeleitet, der die weitere Signalauswertung und Signalverarbeitung vornimmt. Der Mikroprozessor 55 ermittelt beispielsweise eine Drehzahl und eine Drehrichtung oder eine abgeleitete Größe daraus.

Eine besonders vorteilhafte Weiterbildung sieht den Einsatz der Spannungswandlerschaltung 43 vor. Die Spannungswandlerschaltung 43, deren Schaltung beispielsweise aus dem bereits zitierten Fachbuch von U. TIETZE und CH. SCHENK bekannt ist, erhöht die am Stromversorgungsanschluß 44 liegende Spannung auf einen höheren Wert. Der Stromversorgungsanschluß 44 liegt im allgemeinen auf demselben Potential wie der Betriebsspannungsanschluß 21 für die Betriebsspannung des Elektromotors 14. Die Spannungswandlerschaltung 43 ermöglicht deshalb auch dann noch eine sichere Energieversorgung der Sensoranordnung 15 und der magnetfeldempfindlichen Elemente 33, 34, wenn die beiden Schaltmittel 19, 20 den Elektromotor gleichzeitig mit dem ersten Betriebsspannungsanschluß 21 zum Kurzschließen des Motors verbinden. Eine andere Möglichkeit, die Energieversorgung der Sensoranordnung 15 sicherzustellen, wenn die beiden Schaltmittel 19, 20 zum Abbremsen des Elektromotors 14 die beiden Verbindungsleitungen 16, 17 gleichzeitig mit dem Betriebsspannungsanschluß 21 verbinden, besteht darin, die Polarität auf der dritten Verbindungsleitung 18 zu ändern. Über die dritte Leitung wird das negative Potential übertragen, während über wenigstens eine der beiden Verbindungsleitungen 16, 17 das positive Potential bereitgestellt wird. In dem in Figur 1 gezeigten Ausführungsbeispiel muß die Polarität der Dioden 23, 24 geändert werden. Der erste Stromversorgungsanschluß 25 der Sensoranordnung 15 ist mit den Kathodenanschlüssen der Dioden 23, 24 zu verbinden. Weiterhin ist in der Auswerteanordnung 13 die Stromspiegelschaltung 42 in ihrer Polarität zu ändern. Anstelle der in Figur 4 gezeigten PNP-Transistoren werden NPN-Transistoren eingesetzt, deren Emitter jeweils an Masse 22 liegen. Der Arbeitswiderstand 45 ist mit dem Stromversorgungsanschluß 44 zu verbinden.

Anstelle der in Figur 4 gezeigten Komparatoranordnung 59 ist es auch möglich, das vom Tiefpaß 46 abgegebene Signal einem Analog/Digital-Wandler zuzuleiten. Der Vorteil dieser Ausgestaltung liegt darin, daß ein im Mikroprozessor 55 gegebenenfalls bereits vorhandener Analog/Digital-Wandler eingesetzt werden kann. In dieser Ausgestaltung kann dann die Komparatoranordnung 49 vollständig entfallen.

In Figur 5 ist das über die dritte Leitung 18 übertragene Lagesignal 90 gezeigt. Die signalverarbeitende Anordnung 29 ordnet den ihr zugeführten, gegebenenfalls in den Signalspeichern 74, 75 zwischengespeicherten Lagesignalen H1, H2 die unterschiedlichen Signalpegel 91, 92, 93, 94 zu. Der erste Pegel 91 wird dem vom ersten magnetfeldempfindlichen Element 33 erfaßten ersten Lagebereich 68 zugeordnet. Der zweite Signalpegel 92 wird dem vom zweiten magnetfeldempfindlichen Element 34 erfaßten zweiten Lagebereich 69 zugeordnet. Außerhalb der beiden Lagebereiche 68, 69 tritt der vierte Signalpegel 94 auf. Beim Auftreten des Überlappungsgebiets 70, bei dem beide magnetfeldempfindlichen Elemente 28, 34 ein entsprechendes Lagesignal H1, H2 abgeben, ist der dritte Signalpegel 93 zugeordnet. Die Auswertung des Lagesignals 90 in der Auswerteanordnung 13 ist besonders einfach, weil der erste Pegel 91 und der zweite Pegel 92 diskrete unterschiedliche Werte sind. Eine besonders einfache Auswertung wird möglich, wenn der erste Pegel 91 gegenüber dem zweiten Pegel 92 wenigstens näherungsweise den doppelten Wert aufweist. Anstelle des in Figur 5 gezeigten Lagesignals 90, bei dem die Pegel 91, 92, 93, 94 auf den vierten Pegel 94 als Grundpegel bezogen sind, ist es auch möglich, die Basis für den ersten Pegel 91 unabhängig von der Basis des zweiten Pegels 92 festzulegen. Wesentlich ist jedoch, daß unterschiedliche Pegelübergänge P1, P2 auftreten in Abhängigkeit von der Drehrichtung, in welcher das Überlappungsgebiet 70 erreicht wird.

Das Verfahren zur Erfassung der Bewegung, beispielsweise der Drehzahl und der Drehrichtung eines bewegbaren Teils aus dem in Figur 5 gezeigten Lagesignal 90 wird anhand des in Figur 6 gezeigten Flußdiagramms näher erläutert:

In einer Abfrage 100 wird erkannt, ob ein Pegelwechsel P1, P2 stattgefunden hat. Falls ein Wechsel stattgefunden hat, wird in einer nächsten Abfrage 101 festgestellt, ob ein Pl-Pegelwechsel stattgefunden hat. Falls dies der Fall ist, wird zu einer Abfrage 102 weitergegangen, in der festgestellt wird, ob der Pl-Pegelwechsel positiv war. Falls dies zutrifft, wird einem Merksignal in einer Zuweisung 103 der Wert 1 zugewiesen. Falls der P1-Pegelwechsel negativ war, wird in einer Zuweisung 104 dem Merksignal der Wert 0 zugewiesen. Nach den Zuweisungen 103, 104 springt das Programm wieder zur Abfrage 100 zurück.

Falls in der nächsten Abfrage 59 festgestellt wird, daß kein Pl-Pegelwechsel stattgefunden hat, muß zwangsläufig ein P2-Pegelwechsel stattgefunden haben. Das Programm prüft deshalb in der Abfrage 105, ob der P2-Pegelwechsel positiv war. Falls dies zutrifft, wird in der Abfrage 106 nachgesehen, ob das Merksignal den Wert 1 hat. Ist dies der Fall, wird in der Zuweisung 107 ermittelt, daß eine erste Bewegungsrichtung vorgelegen hat. Anschließend springt das Programm zur Abfrage 100 zurück. Falls das Merksignal den Wert 0 aufgewiesen hat, wird zu einem Knoten 108 weitergegangen, der zu einer Zuweisung 109 führt, in der festgehalten wird, daß die entgegengesetzte Bewegungsrichtung aufgetreten ist. Danach springt das Programm zur Abfrage 100 zurück. Falls in der Abfrage 105 festgestellt wird, daß der P2-Pegelwechsel negativ war, wird zur Abfrage 110 weitergegangen, in der festgestellt wird, ob das Merksignal den Wert 1 aufweist. Falls dies nicht zutrifft, wird zur Zuweisung 111 gegangen, in der ermittelt wird, daß die erste Bewegungsrichtung aufgetreten ist. Danach springt das Programm zur Abfrage 100 zurück. Falls das Merksignal den Wert 1 aufweist, wird über den Knoten 108 zur Zuweisung 109 weitergegangen, in der wieder festgehalten wird, daß die andere Bewegungsrichtung aufgetreten ist.

## Patentansprüche

1. Vorrichtung zum Erfassen der Bewegung eines durch einen Motor (14) bewegbaren Teils, mit einem ersten Lagesensor (33), der in Wirkverbindung mit dem bewegbaren Teil steht und der ein erstes Signal H1 abgibt, das wenigstens einem ersten Lagebereich des bewegten Teils zugeordnet ist, und mit einem zweiten Lagesensor (34), der in Wirkverbindung mit dem bewegbaren Teil steht und der ein zweites Signal H2 abgibt, das wenigstens einem zweiten Lagebereich des bewegten Teils zugeordnet ist, dadurch gekennzeichnet, daß die beiden Lagebereiche (68, 69) ein Überlappungsgebiet (70) aufweisen, daß den von den Lagesensoren (33, 34) abgegebenen Lagesignalen (H1, H2) diskrete unterschiedliche Werte zugeordnet sind und daß die addierten diskreten Werte über eine Leitung (18) zu einer Auswerteanordnung (13) geführt sind, die aus den addierten diskreten Werten die Bewegung oder eine abgeleitete Größe des bewegbaren Teils ermittelt.

2. Vorrichtung nach Anspruch 1, dadurch gekennzeichnet, daß als Lagesensoren (33, 34) magnetfeldempfindliche Elemente, vorzugsweise Halleffektsensoren eingesetzt sind.

3. Vorrichtung nach Anspruch 1, dadurch gekennzeichnet, daß dem einen Lagesignal (H1) der doppelte diskrete Wert gegenüber dem anderen Lagesignal (H2) zugeordnet ist.

4. Vorrichtung nach Anspruch 1, dadurch gekennzeichnet, daß zur Addition zwei gesteuerte Stromquellen (37, 38) vorgesehen sind, die jeweils einen vorgegebenen Strom auf der Leitung (18) einprägen.

5. Vorrichtung nach Anspruch 4, dadurch gekennzeichnet, daß in einer mit der Leitung (18) verbundenen Auswerteanordnung (13) eine Stromspiegelschaltung (42) enthalten ist.

6. Vorrichtung nach Anspruch 4, dadurch gekennzeichnet, daß in einer mit der Leitung (18) verbundenen Auswerteanordnung (13) eine Schaltung (43) zur Erhöhung der Spannung auf der Leitung (18) vorgesehen ist.

7. Vorrichtung nach Anspruch 2, dadurch gekennzeichnet, daß die magnetfeldempfindlichen Elemente (33, 34) in einer integrierten Schaltung enthalten sind.

8. Vorrichtung nach Anspruch 1, dadurch gekennzeichnet, daß ein Umschalter (71) zur Umschaltung der Energieversorgung der magnetfeldempfindlichen Elemente (33, 34) in zeitlicher Folge vorgesehen ist.

9. Vorrichtung nach Anspruch 1, dadurch gekennzeichnet, daß zum Antreiben des bewegbaren Teils ein Elektromotor (14) vorgesehen ist und daß eine Energieversorgung der Sensoranordnung (15) sowohl über die Leitung (18) als auch über wenigstens eine zum Elektromotor (14) führende Verbindungsleitung (16, 17) vorgenommen ist.

10. Vorrichtung nach Anspruch 1, dadurch gekennzeichnet, daß zum Antreiben des bewegbaren Teils ein Elektromotor (14) vorgesehen ist und daß eine Energieversorgung der Sensoranordnung (15) über zwei zum Elektromotor (14) führenden Verbindungsleitungen (16, 17) vorgenommen ist.

11. Vorrichtung nach Anspruch 1, dadurch gekennzeichnet, daß das bewegbare Teil Bestandteil eines Stellantriebs ist, der vorzugsweise in einem Kraftfahrzeug angeordnet ist.

## Claims

1. Device for detecting the movement of a part which can be moved by a motor (14), having a first position sensor (33) which is operationally connected to the movable part and outputs a first signal (H1) which is assigned to at least a first range of positions of the moving part, and having a second position sensor (34), which is operationally connected to the movable part and outputs a second signal (H2) which is assigned to at least a second range of positions of the moving part, characterized in that the two ranges of positions (68, 69) have an overlap region (70), in that discrete, different values are assigned to the position signals (H1, H2) output by the position sensors (33, 34), and in that the added discrete values are led via a line (18) to an evaluation arrangement (13) which determines the movement or a derived variable of the movable part from the added discrete values.

2. Device according to Claim 1, characterized in that elements sensitive to magnetic fields, preferably pole-effect sensors, are used as position sensors (33, 34).

3. Device according to Claim 1, characterized in that one position signal (H1) is assigned twice the discrete value by comparison with the other position signal (H2).

4. Device according to Claim 1, characterized in that two controlled current sources (37, 38) which each impress a prescribed current on the line (18) are provided for the purpose of addition.

5. Device according to Claim 4, characterized in that a current mirror circuit (42) is included in an evaluation arrangement (13) connected to the line (18).

6. Device according to Claim 4, characterized in that a circuit (43) for increasing the voltage on the line (18) is provided in an evaluation arrangement (13) connected to the line (18).

7. Device according to Claim 2, characterized in that the elements (33, 34) sensitive to magnetic fields are included in an integrated circuit.

8. Device according to Claim 1, characterized in that a changeover switch (71) is provided for the purpose of changing over in temporal sequence the power supply of the elements (33, 34) sensitive to magnetic fields.

9. Device according to Claim 1, characterized in that an electric motor (14) is provided for driving the movable part, and in that supplying the sensor arrangement (15) with power is undertaken both via the line (18) and via at least one connecting line (16, 17) leading to the electric motor (14).

10. Device according to Claim 1, characterized in that an electric motor (14) is provided for driving the movable part, and supplying the sensor arrangement (15) with power is undertaken via two connecting lines (16, 17) leading to the electric motor (14).

11. Device according to Claim 1, characterized in that the movable part is a component of an actuator which is preferably arranged in a motor vehicle.

## Revendications

1. Dispositif de détection du mouvement d'une pièce mobile entraînée par un moteur (14), comprenant un premier capteur de position (33) coopérant avec la pièce mobile et fournissant un premier signal (H1) attribué à au moins une première plage de positions de la pièce mobile, et un second capteur de position (34) coopérant avec la pièce mobile et fournissant un second signal (H2) attribué à au moins une seconde plage de positions de la pièce mobile,
caractérisé en ce que
• les deux plages de positions (68, 69) ont une zone de chevauchement (70),
• des valeurs discrètes différentes sont attribuées aux signaux de position (H1, H2) fournis par les capteurs de position (33, 34),
• les valeurs discrètes additionnées sont transmises par une ligne (18) à un dispositif d'exploitation (13) qui détermine le mouvement ou une grandeur déduite de la pièce mobile à partir des valeurs discrètes additionnées.

2. Dispositif selon la revendication 1,
caractérisé en ce que
les capteurs de position (33, 34) comportent des éléments magnétosensibles, de préférence des capteurs à effet Hall.

3. Dispositif selon la revendication 1,
caractérisé en ce qu'
une valeur discrète double de celle de l'autre signal de position (H2) est attribuée à un signal de position (H1).

4. Dispositif les revendications 1,
caractérisé par
deux sources de courant commandées (37, 38) qui appliquent chaque fois une intensité prédéterminée à la ligne (18) pour l'addition.

5. Dispositif selon la revendication 4,
caractérisé en ce qu'
un dispositif d'exploitation (13) relié à la ligne (18) comporte un miroir de courant (42).

6. Dispositif selon la revendication 5,
caractérisé en ce que
le dispositif d'exploitation (13) relié à la ligne (18) comporte un circuit (43) pour relever la tension de la ligne (18).

7. Dispositif selon la revendication 2,
caractérisé en ce que
les éléments magnétosensibles (33, 34) font partie d'un circuit intégré.

8. Dispositif selon la revendication 1,
caractérisé par
un commutateur (71) pour commuter l'alimentation des éléments magnétosensibles (33, 34) suivant un ordre séquentiel.

9. Dispositif selon la revendication 1,
caractérisé en ce que
l'entraînement de la pièce mobile est assuré par un moteur électrique (14) et l'alimentation du dispositif de détection (15) se fait à la fois par la ligne (18) et par au moins l'une des lignes (16, 17) reliées au moteur électrique (14).

10. Dispositif selon la revendication 1,
caractérisé en ce que
l'entraînement de la pièce mobile est assuré par un moteur électrique (14) et l'alimentation du dispositif de détection (15) se fait par deux lignes (16, 17) reliées au moteur électrique (14).

11. Dispositif selon la revendication 1,
caractérisé en ce que
la pièce mobile fait partie d'un entraînement de réglage associé de préférence à un véhicule automobile.
